Europäisches Patentamt

European Patent Office

Office européen des brevets

(11) Publication number: **0 410 607 A2**

# EUROPEAN PATENT APPLICATION

(21) Application number: 90307627.1

(22) Date of filing: **12.07.90**

(51) Int. Cl.5: **C08F 212/08, C08F 220/06, C08F 291/02, C08J 9/18**

(30) Priority: **27.07.89 US 385520**

(43) Date of publication of application:
**30.01.91 Bulletin 91/05**

(84) Designated Contracting States:
**BE DE FR GB IT NL**

(71) Applicant: **ARCO CHEMICAL TECHNOLOGY INC.**
**3 Christina Centre Suite 902 201 N Walnut Street**
**Wilmington Delaware 19801(US)**

(72) Inventor: **Treleaven, James W.**
**335 E. Lancaster Avenue, Apt. 5**
**Downingtown PA 19335(US)**
Inventor: **Yang, Lau Shan**
**2604 North Gate Road**
**Wilmington, Delaware 19810(US)**

(74) Representative: **Cropp, John Anthony David et al**
**MATHYS & SQUIRE 10 Fleet Streeteet**
**London, EC4Y 1AY(GB)**

(54) Process for producing uniformly sized beads of styrene/methacrylic acid copolymer.

(57) Uniformly sized beads of styrene/methacrylic acid copolymer are prepared by the process of this invention. A water-soluble inorganic salt such as sodium sulfate is used in combination with a water-soluble organic polymer such as polyvinyl alcohol in a suspension polymerization to control bead size distribution. The copolymer beads obtained are particularly useful in molded foam applications.

EP 0 410 607 A2

# PROCESS FOR PRODUCING UNIFORMLY SIZED BEADS OF A STYRENE/METHACRYLIC ACID COPOLYMER

This invention relates to a process for the preparation of useful thermoplastic resins in bead form by suspension copolymerization. More particularly, the invention provides a method for producing styrene/methacrylic acid copolymer beads of uniform size.

## BACKGROUND OF THE INVENTION

Copolymers of styrene and methacrylic acid are thermoplastics known to possess a number of useful properties, including good dimensional stability and processability. Articles molded from such copolymers display good resistance to hot water and are able to withstand steam pasteurization. The heat resistance of the copolymers is much greater than that of polystyrene. Furthermore, the heat distortion temperature may be controlled as desired by varying the methacrylic acid content. Styrene/methacrylic acid copolymers have excellent clarity and high chemical resistance, especially to oil. Because of their desirable combination of properties, styrene/methacrylic acid copolymers are ideal for use in appliances, electrical equipment housings, microwave food containers, automotive parts, medical equipment, packaging, and optical parts.

Foamed articles may be prepared from styrene/methacrylic acid copolymer by impregnating beads of the copolymer with a volatile blowing agent and expanding the impregnated beads at elevated temperature in a mold. The expanded beads fuse together to form the molded foam article. For this application, the copolymer beads should be essentially spherical, uniform in size, and sufficiently large so as to avoid the handling problems encountered with the use of finely powdered resins. If beads smaller or greater than the optimum size are used, they tend to absorb respectively either too much or too little blowing agent with respect to the majority of the beads with the result that the final molded article has a non-uniform cell structure. Very large beads are not suitable for moldings having intricate surfaces or thin cross-sections. Fine beads segregate readily during storage to the bottom of a storage container, tend to carry a greater static charge, and have a relatively short shelf-life because of their more rapid release of blowing agent during storage. Beads which are spherical and which have a narrow size distribution will permit closer and more uniform packing of the beads during foaming, resulting in a higher quality molded article.

A number of different processes for the preparation of styrene/methacrylic acid copolymers have been described in the prior art, including bulk or solution polymerization (as taught in U.S. Pat. Nos. 3,035,033 and 4,275,182, for example).

One type of process which has been found to be particularly well-suited for styrene/methacrylic acid copolymerization is suspension polymerization, in which monomers initially suspended in water as liquid droplets are converted to solid copolymer beads. One of the primary advantages of a suspension polymerization is that temperature control is relatively simple due to the ability of the water phase to dissipate the heat of reaction and the low viscosity of the polymer suspension.

U.S. Pat. No. 3,839,308 teaches a suspension polymerization process in which the methacrylic acid is continuously introduced until 50% conversion of the styrene monomer is achieved. According to the teachings of this patent, copolymers substantially homogeneous in character and having high heat distortion temperature and tensile strength may be obtained.

U.S. Pat. No. 4,631,307 teaches the preparation of rubber-modified styrene/methacrylic acid copolymers using either emulsion polymerization in combination with a coagulation step or bulk polymerization followed by suspension polymerization.

Jpn. Pat. No. 61-252209 teaches a suspension polymerization process in which the methacrylic acid is added during the initial stage of polymerization. The suspension preferably contains an emulsion polymerization inhibitor to reduce the formation of unrecoverable finely powdered copolymer. Higher water/monomer ratios were found to yield products having superior physical properties.

Jpn. Pat. No. 60-248708 teaches polymerization of styrene and methacrylic acid using a free radical initiator. The monomers are partially polymerized in bulk, and then treated with water and partially saponified polyvinyl acetate to create a suspension polymerization system.

U.S. Pat. No. 4,385,156 discloses a suspension polymerization process for producing coated styrenic polymer beads wherein styrene and methacrylic acid are copolymerized in the presence of "seed" beads which form the core of the coated beads.

However, the prior art methods for the suspension polymerization of styrene and methacrylic acid yield relatively small beads ranging in average size from about 150 to 1100 microns and having a broad size distribution. Suspension polymerization of styrene and methacrylic acid is complicated by the water-solubility and polarity of the methacrylic acid. As a result, methods which work well for controlling bead size and suspension stability in the polymerization of water-insoluble non-polar monomers such as styrene are not ordinarily directly suitable for use in styrene/methacrylic acid copolymerizations.

It is apparent there exists a need for an improved suspension process for the copolymerization of styrene and methacrylic acid which will produce copolymer beads large and uniform in size and directly usable in foam applications.

## SUMMARY OF THE INVENTION

This invention provides a process for producing styrene/methacrylic acid copolymer beads having a narrow size distribution. The process of this invention is particularly well-suited for the production of copolymer beads sufficiently uniform in size that at least about 75%, more preferably at least about 85%, of the beads have diameters falling within a range of about 0.5 mm (for example, from about 0.6 to 1.1 mm).

In the first step of the process, a biphasic mixture of water, styrene, methacrylic acid, a water-soluble inorganic salt, and a free radical polymerization initiator is reacted until from about 5 to 50 percent of the styrene and methacrylic acid are copolymerized. A water-soluble organic polymer such as polyvinyl alcohol is then added to the biphasic mixture in an amount effective to form a plurality of discrete liquid droplets containing copolymer and unreacted monomer suspended in a continuous aqueous phase. The styrene and methacrylic acid are further reacted until the liquid droplets are converted into solid beads of styrene/methacrylic acid copolymer. The solid beads are then separated from the aqueous phase.

The spherical copolymer beads produced in accordance with the process of this invention are remarkably uniform in size and can be made sufficiently large in size to enable direct use in foamed bead applications without an intermediate pelletization step.

Molded articles obtained by molding the solid beads of copolymer produced by this process exhibit physical properties, including heat distortion resistance and low moisture absorbance, at least equivalent to those exhibited by styrene/methacrylic acid copolymers produced by prior art processes. A further advantage of the process of this invention is that the composition of the copolymer obtained is very close to that of the monomer mixture initially charged. Copolymer properties can thus be precisely controlled while minimizing loss of the the methacrylic acid. The present process does not require the use of a water-insoluble inorganic suspending agent such as tricalcium phosphate to stabilize the suspension or to control bead size. Removing such agents generally requires an additional separate acid wash step during bead recovery. If not removed, the residual agents may reduce the clarity of articles molded from the copolymer beads or present toxicity concerns if the final molded product is to be used in a food service application.

## DETAILED DESCRIPTION OF THE INVENTION

The copolymer produced in accordance with the process of this invention is comprised of styrene and methacrylic acid. Although the relative proportions of these monomers are not critical, preferably from about 40 to 99 weight percent of styrene and from about 1 to 60 weight percent of methacrylic acid are present. In view of the high water solubility of methacrylic acid, it was surprising to find that copolymers having exceptionally high levels (>30%) of methacrylic acid could be readily prepared by the process of this invention. Because of the difficulties encountered in molding high methacrylic acid content products, however, the copolymer is more preferably comprised of from about 70 to 92.5 weight percent styrene and from about 7.5 to 30 percent methacrylic acid. The glass transition temperature of the copolymer may be readily varied as desired by changing the methacrylic acid content. The copolymer is substantially random in structure; that is, it does not contain any "blocks" or segments containing only one type of monomer unit. The number average molecular weight of the copolymer may be from about 10,000 to 1,000,000; most typically, the number average molecular weight is between about 30,000 and 100,000. The molecular weight may be controlled, if desired, by adding during copolymerization one or more of the chain transfer agents well-known in the free radical polymerization art.

In addition to styrene, other vinyl aromatic monomers may be used in the process of this invention. These other vinyl aromatic monomers should be capable of being polymerized by free radical means and are preferably liquid at the polymerization temperature and substantially insoluble in water. Such compounds include, for example, ar-methyl styrene, ar-ethyl styrene, ar-tert-butyl styrene, ar-chloro styrene, alpha-methyl styrene, divinyl benzene, vinyl benzylchloride and vinyl naphthalene, as well as other alkyl- or halo-substituted styrenes. Mixtures of mono-vinyl aromatic monomers may also be employed. Minor amounts of other ethylenically unsaturated copolymerizable monomers may also be employed, including unsaturated nitriles such as acrylonitrile.

One or more other $\alpha,\beta$-unsaturated carboxylic acid moieties may be used in minor amounts in addition to methacrylic acid in the process of this invention. Acrylic acid and $\alpha,\beta$-unsaturated carboxylic acids having from 3 to 6 carbon atoms which can be polymerized by free radical means are preferred examples of other suitable $\alpha,\beta$-unsaturated carboxylic acid moieties. Acrylate esters such as methyl methacrylate may also be used. The $\alpha,\beta$-unsaturated carboxylic acid moiety should be liquid and substantially soluble in styrene at the polymerization temperature.

In one embodiment of the process of this invention, styrene, methacrylic acid, a water-soluble inorganic salt, and water are combined in a reactor to form a biphasic mixture. The reactor should be capable of being stirred, heated, and cooled and may be of any type generally suitable for use in a suspension polymerization process. The mixture is stirred and heated at a suitable temperature in the presence of a free radical polymerization initiator to begin polymerization. Alternatively, the water-soluble inorganic salt may be added to the biphasic mixture after polymerization has been initiated.

The particular water-soluble inorganic salt employed is not critical, although it is important that the salt does not interfere with the polymerization or adversely affect the properties of the polymer product. Preferably, the salt is essentially neutral (that is, not highly acidic or basic) and not readily oxidized or reactive with free radicals. Suitable water-soluble inorganic salts include, but are not limited to, alkali metal and alkaline earth halides such as sodium chloride, sodium bromide, potassium chloride, potassium bromide, magnesium chloride, and calcium chloride, alkali metal or alkaline earth sulfates such as sodium sulfate, potassium sulfate, and magnesium sulfate, and alkali metal or alkaline earth nitrates such as sodium nitrate and potassium nitrate. Mixtures of these or other water-soluble inorganic salts may be used.

The concentration of water-soluble inorganic salt should be sufficient to provide a more narrow bead size distribution relative to the bead size distribution obtained in the absence of the water-soluble inorganic salt. This amount will vary depending on the water:monomer ratio, the styrene:methacrylic acid ratio, the type and concentration of the suspending agent, the agitation rate, as well as other reaction parameters, but is preferably from about 0.5 to 5 percent (most preferably, from about 1 to 2 weight percent) by weight of the aqueous phase. Higher concentrations are unnecessary and can result in precipitation of the water-soluble organic polymer. A suitable salt concentration for a particular set of reaction conditions can be easily determined by adding incremental amounts of salt to a partially polymerized reaction mixture until the desired degree of dispersion of the organic phase into discrete liquid droplets is observed.

The beneficial results obtained by the use of the water-soluble inorganic salt were completely unexpected, as suspension polymerizations are generally performed using water which has been carefully purified to remove dissolved salts. It is well known in other suspension polymerization processes that the presence of ionic substances can result in inhibition of polymerization or contamination of the polymer product.

The free radical polymerization initiator may be any of the organic-soluble initiators well known in the suspension polymerization art such as organic peroxides, peresters, perketals or percarbonates. A mixture of free radical polymerization initiators may be advantageously used; mixtures of a low temperature and a high temperature initiator have been found to be particularly effective. If a mixture of initiators is employed, they may be introduced at different times during the copolymerization. Likewise, if only one initiator is used, it may be added in portions while the copolymerization is proceeding. Examples of low temperature initiators include organic peroxides such as benzoyl peroxide, caproyl peroxide, lauroyl peroxide, t-butyl peroctoate, cyclohexanone peroxide, and decanoyl peroxide, as well as other initiators such as azo-bis-isobutyronitrile (AIBN). Illustrative high temperature initiators include, t-butyl peracetate, t-butylperbenzoate, or t-butyl peroxy isopropyl carbonate. The amount of low temperature initiator preferably varies from about 0.03 to 1.0%, most preferably from about 0.08 to 0.25%, by weight based on total weight of the monomers. The high temperature initiator preferably is employed in amounts varying from about 0.01 to 0.25%, most preferably from about 0.05 to 0.15%, by weight based on total weight of the monomers. In any case, the total amount of initiator should be sufficient to achieve substantial (preferably, over 95%) conversion of the monomers under the reaction conditions used.

The weight ratio of water to total monomer used in the process of the invention is not critical. In general, ratios ranging from about 1:1 to 4:1 are suitable.

The biphasic mixture comprising water, styrene, methacrylic acid, and the free radical initiator is heated with stirring, preferably at a temperature of between about 60°C and 100°C, to initiate polymerization of the monomers. It may be desirable to initiate polymerization with only a portion of one monomer present and then add the remainder of that monomer continuously to the reaction mixture. This and other variations in combining the monomers are considered to be within the scope of this invention. During the first phase of the polymerization, the mixture will consist of an organic phase and an aqueous phase. The mixture will generally be milky-white in appearance if sufficient agitation is applied. Under these conditions, the organic phase (containing the majority of the styrene and methacrylic acid copolymer) will be finely dispersed in the aqueous phase. If the rate of agitation is low, however, the monomers will comprise a substantially continuous organic phase. If agitation of the stirred biphasic mixture is stopped, the finely dispersed organic phase readily forms a substantially continuous organic phase. The degree of agitation during the first phase of the polymerization is not critical, as good results can be obtained independent of the agitation rate. As polymerization proceeds, the copolymer formed will be largely dissolved in the organic phase.

Monomer conversion and viscosity are monitored until from about 5 to 50% of each of the monomers has reacted and the organic phase has begun to thicken noticeably due to copolymer formation. The viscosity of the organic phase at this point is preferably not greater than about 200 poise at 25° C; more preferably, the viscosity does not exceed about 50 poise. A water-soluble organic polymer in an amount effective to convert the organic phase into a plurality of discrete liquid droplets is then introduced into the biphasic mixture. The discrete liquid droplets are comprised of the copolymer and unreacted monomers and are substantially the same size as the desired size of final copolymer beads. From the time at which the water-soluble organic polymer is added to the completion of polymerization, sufficient agitation is supplied to prevent agglomeration of the discrete droplets without breaking up the droplets into an overly fine emulsion. The precise agitation rate is not critical and can vary widely due to the inherent stability of the suspension.

The water-soluble organic polymer is most preferably added when from about 10 to 20% monomer conversion has occurred. The average bead size can generally be controlled as desired by adjusting the time at which the water-soluble organic polymer is introduced into the biphasic mixture. For example, larger beads will typically be obtained by adding the water-soluble organic polymer when a higher degree of monomer conversion has been achieved.

Any water-soluble organic polymer suitable for forming the discrete droplets may be used. Preferred water-soluble organic polymers include polyvinyl alcohol, partially saponified poly(vinyl acetate), water-soluble cellulose derivatives such as methyl cellulose, hydroxy ethyl cellulose, and carboxyl methyl cellulose, poly($\alpha,\beta$-unsaturated carboxylic acids) such as poly(acrylic acid), and poly(vinyl pyrrolidinone). Of these, polyvinyl alcohol is the most preferred since relatively low concentrations are generally quite effective in converting the organic phase into liquid droplets. Polyvinyl alcohol having a molecular weight of from about 75,000 to 110,000 is most favored for use in the process of this invention. An example of a suitable polyvinyl alcohol is VINOL® 540, a product of Air Products and Chemicals. The amount of water-soluble polymer required to achieve the desired formation of liquid droplets will vary depending on the particular water-soluble organic polymer used, styrene/methacrylic acid ratio, temperature, agitation rate, and water/monomer ratio among other factors. From about 0.005 to 1.0% (more preferably, from about 0.02 to 0.1%) polyvinyl alcohol based on the total weight of water and monomer will usually be effective, for example.

In general, however, the water-soluble organic polymers useful in the process of this invention are most suitably used in concentrations from about 0.005 to 10.0% by weight of the total biphasic mixture.

It is important to add the water-soluble organic polymer to the biphasic mixture after polymerization has been initiated. For reasons that are not well understood, attempts to obtain spherical copolymer beads of uniform size were unsuccessful when this sequence of steps was reversed.

After addition of the water-soluble organic polymer, copolymerization of the remaining unreacted monomers is continued until substantially all (preferably, over 95%) of the monomer has reacted and the liquid droplets have been converted to solid beads of copolymer. Completion of polymerization may be carried out at temperatures comparable to or slightly higher than those used during the initial part of the polymerization. More preferably, though, the reaction temperature is increased to over 100° C in order that all of the residual monomer is reacted more quickly. It is preferred that this final temperature not exceed the glass transition temperature of the copolymer, however, so that the beads do not soften and agglomerate.

The slurry of solid copolymer beads in water obtained by the process of this invention may then be treated to separate the beads from the aqueous phase. Methods such as filtration, decantation, or centrifugation are suitable for this purpose. The separated beads may be washed with water or other suitable solvent to remove residual impurities, particularly any water-soluble polymer or inorganic salt which may be on the surface of the polymer beads. The separated beads can then be dried by any suitable method to remove water and other volatile residues. Sieving may be employed if desired to separate any small amount of fine powder or overly large beads from the copolymer beads of the desired size. This is generally not necessary, however, due to the exceptionally narrow size distribution afforded by the process

5

of this invention.

If desired, the fine powder obtained after sieving the bead copolymer product can be readily recycled in subsequent copolymerizations. The fine powder is apparently incorporated into larger sized beads since the relative proportion of fine powder produced in the subsequent run is not larger than is observed in the absence of the fine powder. Thus, accumulation of the fine powder by-product, which may be too small to be used directly in a foamed bead application, can be easily avoided.

In one embodiment of this invention, one or more rubbery polymers are added to the biphasic mixture to produce a rubber-modified copolymer. The rubber-modifier greatly improves the impact strength of the copolymer and reduces the brittleness of the product. The rubbery polymer preferably has a glass transition temperature below $0^\circ C$ (more preferably, below $-30^\circ C$) and contains at least one ethylenically unsaturated functional group which provides a site for grafting onto the styrene/acrylic acid monomer copolymer. It is desirable to combine the rubbery polymer with the comonomers in the first step of the process before polymerization is initiated.

Exemplary rubber polymers for use in preparing impact-modified copolymer beads include polybutadiene, polyisoprene, styrene-butadiene copolymers (block or random), butadiene-acrylonitrile copolymer, polychloroprene, polyisobutylene, ethylene-propylene copolymer, acrylonitrile-butadiene-styrene terpolymers, ethylene-propylene-diene (EPDM) terpolymers, butadiene-acrylate copolymers, polypentenamers, alkyl acrylate polymers and copolymers, ethylene-vinyl acetate copolymers, ethylene-alkyl acrylate copolymers, and the like. Other similar impact modifiers known to those skilled in the art are also suitable. The use of polybutadiene or styrene-butadiene block or random copolymers is generally preferred, particularly polybutadiene having a high (>35%) cis-1,4-polybutadiene content.

The amount of the rubbery polymer which may be used is preferably from about 1 to 70 weight percent, most preferably about 5 to 40 weight percent, of the total weight of copolymer.

In another embodiment of this invention, a pigment or dye is added to the biphasic mixture to produce pre-colored copolymer beads. The copolymer beads thus obtained can be used directly in the preparation of colored molded articles; no separate dyeing or melt-blending step is required.

If desired, a lubricant may be readily incorporated into the copolymer beads by adding a suitable lubricant to the biphasic mixture before copolymerization is completed. A separate melt-blending step thus is not needed. In the process of this invention, the lubricant is most preferably dissolved in the monomers prior to initiation.

The lubricant-containing beads have a higher bulk density and have improved melt flow properties and lower color when extruded or otherwise melt-processed. Without wishing to be bound by theory, it is believed that the lubricant reduces the affinity of the copolymer for the water-soluble organic polymer. As a result, less of the water-soluble organic polymer remains in the beads when a lubricant is used. Since the water-soluble organic polymers usable in the process of this invention tend to be thermally unstable, color development during extrusion is minimized if a lubricant is present during bead formation.

Any suitable lubricant may be employed, including for example long chain ($C_{14}$-$C_{32}$) alkyl alcohols, esters, diesters, or amides of long chain ($C_{14}$-$C_{32}$) alkyl alcohols, long chain ($C_{14}$-$C_{32}$) aliphatic carboxylic acids and metallic soaps thereof, polysiloxanes, hydrocarbon waxes, as well as naturally derived waxes such as beeswax, candelilla, carnauba, Japan wax, ouricury wax, Douglas-Fir Bark wax, rice-bran wax, jojoba wax, castor wax, bayberry wax, Montan wax, and peat wax. The use of one or more hydrocarbon waxes as a lubricant is preferred. Illustrative hydrocarbon waxes include liquid branched chain paraffins, solid straight chain paraffins, high density polyethylene waxes (preferably having molecular weights of about 1000 to 9000), low density polyethylene waxes (preferably having modecular weights of about 1500 to 2500), polypropylene waxes, Fischer-Tropsch waxes, mineral oil, petroleum jelly, chemically-modified hydrocarbon waxes, microcrystalline waxes, and semi-crystalline waxes.

The lubricant is preferably soluble in the styrene/methacrylic acid monomer mixture and should not interfere with the suspension stability. The amount of lubricant is not critical, but concentrations in the copolymer product of from about 0.1 to 5.0 weight percent are generally suitable. High levels of lubricant may adversely affect the heat resistance of molded articles.

The solid beads of copolymer produced in accordance with the process of this invention can be molded into useful articles by any suitable molding method, including injection molding, blow molding, and extrusion molding. The beads may be molded directly or pelletized into larger beads before molding. Polymer blends and alloys may be obtained by blending the copolymer beads with other thermoplastic or elastomer resins. It may be advantageous to incorporate additives such as lubricants, anti-static agents, colorants, fillers, plasticizers, reinforcing fillers, anti-oxidants, and light stabilizers into the copolymer beads.

In one embodiment of this invention, the copolymer beads are impregnated with one or more volatile blowing agents such as pentane or other low-boiling hydrocarbon, methylene chloride, carbon dioxide, or a fluorocarbon. The impregnation may be accomplished by any of the methods generally suitable for impregnating thermoplastic beads. For example, the copolymer beads may be suspended in an aqueous medium together with the blowing agent and impregnated at elevated temperature and pressure. The impregnation may be carried out during or immediately following the suspension copolymerization. The expandable impregnated beads, once recovered from the aqueous medium, are then shaped into molded articles by heating. The beads expand and fuse together to form the molded article. Preferably, the impregnated beads are pre-expanded before the final molding step. Such methods are described in Ingram et al "Polystyrene and Related Thermoplastic Foams" Plastic Foams Marcel Dekker (1973), Part II, Chapter 10, pp. 531-581, InPram "Expandable Polystyrene Processes" Addition and Condensation Polymerization Processes American Chemical Society (1969), Chapter 33, pp. 531-535, and U.S. Pat. Nos. 2,983,692; 3,072,581; 3,304,274; 3,126,354; 2,950,261; 2,893,963; 3,085,073; 3,088,925; 2,744,291; 2,787,809; 3,324,052; 3,192,169; 3,265,643; and 4,547,527. The teachings of these references are incorporated herein in their entirety.

Without further elaboration, it is believed that one skilled in the art can, using the preceding description, utilize the present invention to its fullest extent. The following examples, therefore, are to be considered as merely illustrative and not limitative of the claims or remainder of the disclosure in any way whatsoever.

## EXAMPLE 1

This example illustrates the preparation of uniformly sized copolymer beads having a 85:15 styrene/methacrylic acid weight ratio by suspension polymerization in accordance with the process of this invention.

A 4 liter resin reactor equipped with a mechanical stirrer, a thermometer, and a condenser was charged with the following:

|  | Wt., g |
| --- | --- |
| Deionized Water | 2100 |
| Sodium Sulfate | 16 |
| Styrene | 595 |
| Methacrylic Acid | 105 |
| Benzoyl Peroxide | 2.1 |

The mixture was heated at $90°C$ with agitation for 30 minutes until two clearly separated phases were observed. An aqueous solution of polyvinyl alcohol (5%, 30 g) was then added, causing the organic phase to disperse into discrete liquid droplets. Polymerization was continued for another 6 hours at the same temperature. The mixture was cooled and the product collected on a 200 mesh sieve. After washing with water and drying, the copolymer beads obtained weighed 680g (97% yield), were almost perfectly spherical in shape, and had a glass transition temperature (Tg) of $140°C$ (measured by DSC). The bead size distribution determined by sieving was exceptionally narrow:

| >1.1 mm | 1% |
| --- | --- |
| 0.6 - 1.1 mm | 97% |
| <0.6 mm | 2% |

## EXAMPLE 2

This example demonstrates that the process of this invention can be performed at a relatively low water:monomer ratio (in this example, 2:1) while maintaining a stable low viscosity suspension and uniform bead sized In this example, the water-soluble inorganic salt was added after polymerization had been

7

initiated.

The reactor used in Example 1 was charged with the following materials:

|  | Wt., g |
|---|---|
| Deionized Water | 1800 |
| Styrene | 765 |
| Methacrylic Acid | 135 |
| Benzoyl Peroxide | 2.71 |

The mixture was agitated at 360 rpm using a stirrer tip speed of about 4.7 ft/sec. while heating to 90°C. An aqueous solution of sodium sulfate (18g in 100 mL water) was added 70 minutes after the temperature of the mixture reached 80°C. At 85 minutes, an aqueous polyvinyl alcohol solution (5%; 40g) was added to disperse the organic phase into discrete liquid droplets.

After 170 minutes, a mild exotherm to 92°C lasting about 40 minutes was observed. Polymerization was continued at 90°C for a total of 5 hours. The solid beads obtained were water washed and dried to give 870g (97% yield) of copolymer having a Tg of 139°C. Analysis indicated that nearly 90% of the beads were in the desired size range:

| >1.1 mm | 0.1% |
|---|---|
| 0.6 - 1.1 mm | 88.9% |
| <0.6 mm | 11.0% |

## EXAMPLE 3

This example shows that the copolymer obtained in the form of undesirably fine powder can be recycled to give larger beads. This procedure thus provides a method of preventing the unwanted accumulation of fine powder.

A resin reactor was charged with the same amounts of reaction components as in Example 2. Sixty minutes after the reaction temperature had reached 85°C, an aqueous solution of sodium sulfate (18g in 100 mL water) was added. After 70 minutes, the fine powder (<0.6 mm) from Example 2 was added to the polymerization mixture. Polyvinyl alcohol (40 g of a 5% aqueous solution) was added at 80 minutes. The polymerization and product isolation were completed using the procedures described in Example 2. A 96% yield of copolymer was obtained. The bead size distribution was comparable to that observed in Example 2, indicating that no build-up of fines was occurring:

| >1.1 mm | 0.3% |
|---|---|
| 0.6 - 1.1 mm | 89.0% |
| <0.6 mm | 10.7% |

## EXAMPLE 4

This example demonstrates that uniformly sized copolymer beads containing a high level (20 weight percent) of methacrylic acid can be prepared using the process of this invention.

The 4 liter resin reactor of Example 1 was charged with:

|  | Wt., g |
|---|---|
| Deionized Water | 1800 |
| Styrene | 720 |
| Methacrylic Acid | 180 |
| Benzoyl Peroxide | 2.71 |

After heating 60 minutes at 85-90°C, sodium sulfate (18g in 100 mL water) was added. Polyvinyl alcohol (40 g of a 5% aqueous solution) was added after 75 minutes. The copolymerization was continued for a total of 6 hours and the product isolated using the previously described procedure. A 98% yield of copolymer beads (Tg = 149°C) was obtained. As in previous examples, the bead size distribution was exceptionally narrow:

| >1.1 mm | 1.3% |
|---|---|
| 0.6 - 1.1 mm | 88.0% |
| <0.6 mm | 10.8% |

EXAMPLE 5

The incorporation of a dye into a styrene/methacrylic acid copolymer during suspension polymerization while maintaining a narrow bead size distribution is shown by this example.

The reactor used in previous examples was charged with the following:

|  | Wt., g |
|---|---|
| Deionized Water | 1800 |
| Styrene | 720 |
| Methacrylic Acid | 180 |
| Benzoyl Peroxide | 2.71 |
| Perox Blue 2 R[1] | 5 mg |

[1] A blue dye produced by Morton Chemical

The copolymerization was carried out in exactly the same manner as in Example 4, including the addition of sodium sulfate prior to the polyvinyl alcohol addition. The copolymer beads produced possessed an aesthetically pleasing light blue tint and were quite uniform in size:

| >1.1 mm | 0.9% |
|---|---|
| 0.6 -1.1 mm | 88.6% |
| <0.6 mm | 10.5% |

EXAMPLE 6

The preparation of an impact-modified styrene/methacrylic acid copolymer in bead form by the process of this invention is demonstrated by this example.

A 4 liter resin kettle equipped as described in Example 1 was charged with the following components:

|  | Wt., g |
|---|---|
| Deionized Water | 2000 |
| Sodium Sulfate | 20 |
| Styrene | 727 |
| Methacrylic Acid | 128 |
| Butadiene/Styrene Rubber[1] | 150 |
| Benzoyl Peroxide | 1.0 |
| Dilauroyl Peroxide | 3.0 |

[1]57/43, random

The monomers and butadiene/styrene rubber are mixed before adding the other components in order to dissolve the rubber. The copolymerization was conducted using the procedure described in Example 1. A high yield (93%) of spherical uniformly sized copolymer beads was obtained. The impact strength of a molded article prepared using these beads exhibited a Notched Izod of 2.51 ft.lbs/in, compared to 0.3 for an article made by molding the copolymer beads of Example 1.

## EXAMPLES 7-9

To demonstrate the use of other water-soluble organic polymers in the process of this invention, the procedure of Example 1 is repeated using 37.5g hydroxyethyl cellulose (Example 7), 4.5g 75% saponified poly(vinyl acetate) (Example 8), or 28.0g polyacrylic acid (Example 9) in place of the polyvinyl alcohol. In each case, a high yield of spherical uniformly sized copolymer beads should be obtained.

## EXAMPLES 10-12

To demonstrate the use of other water-soluble inorganic salts in the process of this invention, the procedure of Example 1 is repeated using 7.0g sodium chloride (Example 10), 12.0g potassium nitrate (Example 11), or 13.0 g calcium chloride (Example 12) in place of the sodium sulfate. In each case, a high yield of spherical uniformly sized copolymer beads should be obtained.

## EXAMPLE 13

The impregnation of the styrene/methacrylic acid copolymer beads prepared by the process of this invention with pentane is illustrated by this example.

A 12 oz. crown capped bottle is charged with the following:

|  | Wt., g |
|---|---|
| Water | 150 |
| Copolymer Beads (Example 1) | 100 |
| Tricalcium Phosphate | 1.33 |
| Sodium Dodecylbenzene Sulfate | 0.04 |
| Polyoxyethylene (20) Sorbitan Monolaurate | 0.10 |
| n-Pentane | 11.5 |
| Sodium Chloride | 4.5 |

The bottle is sealed and then rotated end-over-end for 3 hours at 90°C and 8 hours at 110°C in an oil bath. The bottle is cooled to room temperature, opened, and the contents acidified with hydrochloric acid.

The impregnated beads containing n-pentane are separated from the aqueous medium by filtration, washed with water, and air dried. The impregnated copolymer beads are pre-expanded in a Kohler General Drispander (a reduced pressure double-layer vessel) using a steam pressure of 50 psi to give pre-expanded beads having a volume 10-40 times the original volume. The pre-expanded beads are then formed into a molded article by heating the beads in a closed mold at a temperature sufficient to accomplish further expansion and fusion of the beads.

EXAMPLES 14-20

The preparation of styrene/methacrylic acid copolymer beads containing a lubricant is illustrated by these examples. A polyethylene wax or paraffin wax in the amount shown in Table I was dissolved in the monomer mixture before carrying out the copolymerization procedure described in Example 1. The lubricant-containing copolymer beads were spherical, remarkably uniform in size, and had higher bulk densities than the beads of Example 1. In addition, the melt flow properties as measured by melt index were significantly improved and the extruded products were much lower in color than when no lubricant was used.

COMPARATIVE EXAMPLE 21

This example shows that the size distribution of beads produced by a suspension polymerization using tricalcium phosphate and polyvinyl alcohol, but no water-soluble inorganic salt, is considerably broader than the distribution obtained using the process of this invention. In this example, the polyvinyl alcohol was added before polymerization was initiated in contrast to the present invention process.

The 4 liter resin reactor of Example 1 was charged with the following:

|  | Wt., g |
|---|---|
| Deionized Water | 1800 |
| Styrene | 850 |
| Methacrylic Acid | 150 |
| Benzoyl Peroxide | 3.0 |
| Tricalcium Phosphate | 10 |
| Polyvinyl Alcohol | 1.5 |

The mixture was heated 6 hours at 90°C before collecting the copolymer product in the same manner as described in the previous examples. A 95% yield of copolymer beads having a Tg of 139°C was obtained. However, the bead size distribution was very broad; a large proportion of fine powder (<0.6 mm) was present.

| >1.1 mm | 1.1% |
|---|---|
| 0.6 -1.1 mm | 25.4% |
| 0.425 - 0.6 mm | 36.6% |
| 0.250 - 0.425 mm | 30.9% |
| 0.150 - 0.250 mm | 6.0% |

TABLE I

| Effect of Waxes on the Properties of Styrene/Methacrylic Acid Copolymers | | | | | | |
|---|---|---|---|---|---|---|
| EXAMPLE NO. | LUBRICANT@ | WT.% | BULK DENSITY g/100 mL | MELT INDEX# g/10 min. | Tg, °C | APPEARANCE# |
| 1 | none | 0 | 45.0 | 1.2 | 139 | light yellow |
| 14 | Bareco® 655 | 0.5 | 46.5 | 2.0 | 138 | clear |
| 15 | Bareco® 655 | 1.0 | 52.7 | 2.7 | 136 | clear |
| 16 | Bareco® 1000 | 1.0 | 47.0 | 1.9 | 140 | white |
| 17 | Bareco® 1000 | 2.5 | 47.0 | 2.3 | 140 | white |
| 18 | Paraffin Wax | 1.0 | 47.0 | 2.7 | 130 | clear |
| 19 | Paraffin Wax | 2.5 | 57.0 | 5.6 | 127 | clear |
| 20 | Paraffin Wax | 5.0 | 50.0 | 8.3 | 124 | clear |

@ The Bareco® waxes are polyethylene waxes available from Petrolite Inc. The paraffin wax is the microcrystalline petroleum wax sold by Gulf Oil Company for use in candle making.
# The appearance of the strand from a melt index machine was examined. The ASTM D-1238 Condition L was followed.

## Claims

1. A process for producing styrene/methacrylic acid copolymer beads having a narrow size distribution, the process comprising the steps of:
(a) reacting a biphasic mixture comprising water, styrene, methacrylic acid, a water-soluble inorganic salt, and a free radical polymerization initiator until from about 5 to 50 percent of the styrene and methacrylic acid are copolymerized;
(b) adding a water-soluble organic polymer to the biphasic mixture in an amount effective to form a plurality of discrete liquid droplets containing styrene/methacrylic acid copolymer and unreacted styrene and methacrylic acid suspended in a substantially continuous aqueous phase;
(c) further reacting the styrene and methacrylic acid until the liquid droplets are converted into solid beads of styrene/methacrylic acid copolymer; and
(d) separating the solid beads from the aqueous phase;
wherein the amount of water-soluble inorganic salt is sufficient to provide a more narrow bead size distribution relative to the bead size distribution obtained in the absence of the water soluble inorganic salt.

2. The process of claim 1 wherein the weight ratio of styrene to methacrylic acid is from about 99:1 to 40:60.

3. The process of claim 1 wherein the weight ratio of styrene to methacrylic acid is from about 92.5:7.5 to 70:30.

4. The process of any one of claims 1 to 3 wherein the weight ratio of water to the total amount of styrene and methacrylic acid is from about 1:1 to 4:1.

5. The process of any one of claims 1 to 4 wherein the water-soluble inorganic salt is selected from alkali metal halides, alkaline earth halides, alkali metal sulfates, alkaline earth sulfates, alkali metal nitrates, alkaline earth nitrates, and mixtures thereof.

6. The process of claim 5 wherein the water-soluble inorganic salt is selected from sodium chloride and sodium sulfate.

7. The process of any one of claims 1 to 6 wherein the weight ratio of water-soluble inorganic salt to water is from about 0.5:99.5 to 5:95.

8. The process of any one of claims 1 to 7 wherein the water-soluble inorganic salt is added to the biphasic mixture after polymerization has been initiated and before step (b).

9. The process of any one of claims 1 to 8 wherein reaction step (a) is carried out until from about 10 to 20 percent of the styrene and methacrylic acid are copolymerized.

10. The process of any one of claims 1 to 9 wherein the water-soluble organic polymer is selected from partially saponified poly(vinyl acetate). water-soluble cellulose derivatives, poly($\alpha$,$\beta$-unsaturated carboxylic acids), poly(vinyl pyrrolidinone), and mixtures thereof.

11. The process of any one of claims 1 to 9 wherein the water-soluble organic polymer is poly(vinyl alcohol).

12. The process of any one of claims 1 to 11 wherein the amount of water-soluble organic polymer is from about 0.005 to 1.0 percent of the total weight of the biphasic mixture.

13. The process of any one of claims 1 to 12 wherein at least one of a dye, a rubbery polymer and a lubricant is additionally present in the biphasic mixture.

14. The process of claim 13 wherein the rubbery polymer has at least one ethylenically unsaturated functional group capable of grafting onto the styrene/methacrylic acid copolymer.

15. The process of claim 13 wherein the lubricant is a hydrocarbon wax.

16. The process of any one of claims 1 to 15 comprising the additional step after step (d) of washing and drying the copolymer beads.

17. The process of any one of claims 1 to 16 comprising the additional step after step (c) of impregnating the copolymer beads with a blowing agent.

18. A process for making a molded article comprising molding styrene/methacrylic acid copolymer beads produced in accordance with the process of any one of claims 1 to 17.